# EUROPEAN PATENT SPECIFICATION

(11) **EP 4 512 226 B1**
(45) Date of publication and mention of the grant of the patent: **07.10.2026**
(21) Application number: 23193431.6
(22) Date of filing: 25.08.2023
(51) Int. Cl.: A01D 57/02, A01D 57/03

(54) **CROP INTAKE DEVICE FOR AN AGRICULTURAL HARVESTER**
ERNTEGUTAUFNAHMEVORRICHTUNG FÜR EINE LANDWIRTSCHAFTLICHE ERNTEMASCHINE
DISPOSITIF D'ADMISSION DE RÉCOLTE POUR UNE MOISSONNEUSE AGRICOLE

(43) Date of publication of application: 26.02.2025
(73) Proprietor: CNH Industrial Belgium N.V., 8210 Zedelgem (BE)
(72) Inventor: MONBALIU, Sven, 8210 Zedelgem (BE)
(74) Representative: CNH Industrial IP Department

(56) References cited:
- EP-A1- 4 066 623
- EP-B1- 1 252 813
- EP-B1- 3 141 106
- EP-B1- 3 768 065
- DE-A1- 19 546 263
- US-A1- 2021 268 855
- US-A1- 2022 304 238
- US-B2- 10 602 668

## Description

### TECHNICAL FIELD

The present invention relates to crop intake device for an agricultural harvester, such as a round or square baler, a forage harvester, or a combine harvester. The crop intake device (see as a reference DE DE 195 46 263) comprises a frame and a crop pickup unit that is pivotably mounted to the frame. The crop pickup unit comprises a rotatable reel and at least one support wheel. The rotatable reel has a plurality of tines configured for picking up crop from a field. The at least one support wheel is provided for supporting the crop pickup unit on the field during use, and is pivotable relative to the reel for setting a minimum height of the tines by moving the reel between a lowered configuration and a raised configuration.

### BACKGROUND

When, for example, a large square baler moves over the field to pick up grass or hay, the reel is typically configured to keep the rotating tines at a roughly constant height above the ground (when at their lowest point in the rotation cycle). Depending on the field, the crop, and user preferences, the reel may be configured to move the tine ends just above the ground or up to about 10-15 cm above the ground. The support wheels (typically two) of the crop pickup unit function as gauge wheels that keep the reel at a predetermined height. For that purpose, the support wheels can be pivoted relative to the reel. Because the support wheels rest on the ground, this pivoting relative to the reel causes the reel to move up and down to the predetermined height.

In most crop intake devices, some sort of suspension is provided for absorbing and damping the forces acting upon the crop pickup unit when driving the harvester over an uneven agricultural field. The suspension may, e.g., be provided by a hydraulic damper or a compression spring. While the use of a compression spring may be a relatively easy, cheap, and low maintenance solution, it does generally come with a number of technical disadvantages.

For example, when changing the height of the reel a perpendicular distance between the compression spring and the pivot point of the crop pickup unit on the frame will inevitably change too. Even if the spring force provided by the compression spring had been constant, this change in distance will lead to a change in torque on the crop pickup unit. On top of that, the spring force provided by a compression spring tends to decrease when the spring gets longer. In typical arrangements of the compression spring, this means that the combined effect of a reduced distance to the pivot point and a reduced force from the compression spring leads to a highly reduced torque on the crop pickup unit. When the pivoting motion of the crop pickup unit further causes its centre of gravity to move away from the pivot point, the compression spring may not just provide a highly reduced torque, but it may do so in a situation where it actually needs to deliver far more torque.

It is an aim of the present invention to address one or more disadvantages associated with the prior art.

### SUMMARY OF THE INVENTION

According to an aspect of the invention there is provided an improved crop intake device for an agricultural harvester. The improved crop intake device comprises a frame and a crop pickup unit. The crop pickup unit is pivotably mounted to the frame and comprises a rotatable reel, at least one support member, a first suspension spring, and a second suspension spring. The rotatable reel has a plurality of tines configured for picking up crop from a field. The at least one support member is provided for supporting the crop pickup unit on the field during use, and is pivotable relative to the reel for setting a minimum height of the tines by moving the reel between a lowered configuration and a raised configuration. The first suspension spring and the second spring are both coupled between the frame and the crop pickup unit. The first suspension spring is arranged such that a perpendicular distance between the first suspension spring and a pivot point of the crop pickup unit on the frame increases when moving the reel towards the raised configuration. The second suspension spring is arranged such that a lifting torque provided by the second suspension spring on the crop pickup unit increases when moving the reel towards the raised configuration.

As a result of the increasing perpendicular distance to the pivot point, the lifting torque provided by the first suspension spring increases as the reel is raised. This is very useful, because the centre of gravity of the pickup unit is moved away (measured in a horizontal direction) from the pivot point of the pickup unit. The working-height of the reel is adapted by pivoting the support member relative to the reel.. For example, pivoting the support member downwards relative to the reel raises the reel relative to the ground. The raising of the reel pivots the centre of gravity of the crop pickup unit horizontally away from the pivot point. With the centre of gravity further out, the increasing lifting torque provided by the first suspension spring limits the additional weight the pickup unit exerts on the support member. The support member may, e.g., be a skid plate or a support wheel. In the following, it will be assumed that the support member is a support wheel.

From previous tests, the inventors have found that more lift support may be needed to ensure that the pickup unit exerts a sufficiently constant weight on the support wheel. Especially when the reel approaches its raised configuration, the heavy weight of the pickup unit with its centre of gravity far away from its pivot point (in the horizontal direction) may lead to a drastic increase of the weight that needs to be supported by the support wheel.

The inventors have managed to overcome this problem by adding the second suspension spring and arranging it in such a way that the lifting torque it provides on the pickup unit increases when moving the reel towards the raised configuration. So, the further the centre of gravity moves away from the pivot point, the greater the lifting torque the second suspension spring provides. The second suspension spring thereby helps the support wheel to carry a substantial part of the additional load when the need is there.

When the reel is in or close to its lowered configuration, the centre of gravity is located much closer to the pivot point (in the horizontal direction). In such a position, there is hardly any weight for the support wheel to bear. Advantageously, the lifting torque provided by the second suspension spring decreases when moving the reel towards the lowered configuration. This helps to avoid the pickup unit to become too 'lightweight' and to start bouncing over the field, which is an even bigger problem when the reel is lowered and the tines move close to the ground.

In embodiments of the invention, the first and second suspension springs may both be tension springs. In other embodiments, both suspension springs may be compression springs. Alternatively, one of the two springs may be a suspension spring while the other one is a compression spring. A skilled person will be able to determine for each spring, depending on the type of spring being used, suitable connection points on the frame and on the pickup unit, such that both springs show the behaviour now claimed in claim 1.

In a preferred embodiment, that will be described in more detail below with reference to the drawings, the first suspension spring is a tension spring and the second suspension spring is a compression spring. This combination of spring types makes it possible to strategically position both suspension springs at opposite sides of the pivot point, making it easier to find suitable positions on the frame and the pickup unit to mount the suspension springs to. The combined effect of one suspension spring pulling at and the other suspension spring pushing on the pickup unit leads to an effective joint effort to relieve the support wheel from an appropriate amount of weight resting thereon, regardless of the rotational position of the pickup unit and the height of the reel.

Advantageously, the second suspension spring may be arranged such that the lifting torque on the pickup unit is negative during a portion of a movement of the reel between the lowered configuration and the raised configuration. As described above, when the reel is at or close to its lowered configuration, the centre of gravity of the pickup unit is located close to the pivot point (in the horizontal direction) and the amount of weight resting on the support wheel is relatively small. To avoid the low weight of the pickup unit and the remaining lifting torque provided by the first suspension spring causing the support wheel to lose contact with the ground, the second suspension spring, after having passed the pivot point, actively pushes the pickup unit down. In this so-called over centre configuration, the second suspension spring is arranged to assist in lifting the pickup unit and the reel when additional lifting torque is needed and pushes on the support wheel when the weight on that wheel gets too small.

In such embodiment, the second suspension spring is preferably arranged such that the lifting torque is only negative during an initial portion of the movement of the reel between the lowered configuration and the raised configuration.

It is noted that the availability of an over centre configuration, wherein a longitudinal axis of the second suspension spring moves from below the pivot point to above the pivot point of the crop pickup unit on the frame at some point during the movement between the raised and the lowered configuration is advantageous, but optional. In other embodiments the longitudinal axis of the second suspension spring may, for example, remain below the pivot point in both the lowered and the raised configuration.

In preferred embodiments, the pivot point of the crop pickup unit on the frame is at least substantially coaxial with a rotatable stub auger. By not including the stub auger in the pickup unit, the total weight of the pickup unit is reduced, compared to embodiments wherein the stub auger is part of the pickup unit. This lower weight further helps to reduce the variation in the weight that needs to be carried by the support wheel. Furthermore, pivoting the crop pickup unit around the longitudinal axis of the stub auger ensures that a distance between the reel and the stub auger remains constant while pivoting the crop pickup unit and adjusting the reel height. Hereby, a smooth crop flow into the agricultural harvester is ensured in all possible configurations of the reel.

The crop intake device may further comprise a windguard, arranged to form an infeed channel between the windguard and the rotatable reel, the windguard being configured to pivot together with the crop pickup unit. This can be achieved in two ways. Either the windguard and its support are part of the pickup unit, or the windguard is pivotably mounted to the frame at a location that is different from the location of the pivot point of the crop pickup unit on the frame. In the former situation, the windguard and windguard support simply pivot together with the pickup unit. In the latter situation, some mechanical or electromechanical mechanism may be used for synchronising the pivoting of the pickup unit with the pivoting of the windguard. For example, a mechanical link may push the windguard up and pull it down, in parallel with the reel. Alternatively, a position sensor may be used for monitoring the position of the reel and the windguard may be actively pivoted in dependence of a signal from that position sensor. Actively pivoting the windguard may be done by, for example, an electric or hydraulic motor.

In many embodiments the crop intake device will further comprise an actuator for pivoting the crop pickup unit relative to the frame. The actuator may, for example, be an electronic or hydraulic actuator. The actuator allows the user to remotely adjust the height of the reel. In addition thereto, the actuator may be controlled to selectively assist the first and second suspension springs in their task to exert a suitable lifting torque on the pickup unit.

According to a further aspect of the invention, an agricultural harvester is provided comprising a crop intake device as claimed in any preceding claim. The agricultural harvester may, for example, be a baler, such as a round baler or a square baler. Alternatively, the agricultural harvester may be a forage harvester or a combine harvester. In that event, the crop intake device may be a header designed to be used with a forage harvester or a combine harvester.

### BRIEF DESCRIPTION OF THE DRAWINGS

Embodiments of the invention will now be described by way of example with reference to the accompanying drawings, in which:
Figure 1 shows a perspective cutaway view on the internal workings of an exemplary embodiment of a large square baler that may benefit from the current invention.
Figure 2 shows a side view of part of a crop intake device as may be used in the large square baler of Figure 1, with its crop pick up unit in a lowered configuration.
Figure 3 shows a side view of part of a crop intake device as may be used in the large square baler of Figure 1, with its crop pick up unit in an intermediate configuration.
Figure 4 shows a side view of part of a crop intake device as may be used in the large square baler of Figure 1, with its crop pick up unit in a raised configuration.

### DETAILED DESCRIPTION

In the following, aspects of some features of embodiments of the invention will be described with reference to a horizontal or vertical direction. It is noted that such references are made to the general orientation of the harvester during normal use in a flat field with no inclination. The vertical direction herein corresponds to the direction of gravity. The horizontal direction is perpendicular thereto and will generally refer to directions corresponding to the direction of movement of the harvester.

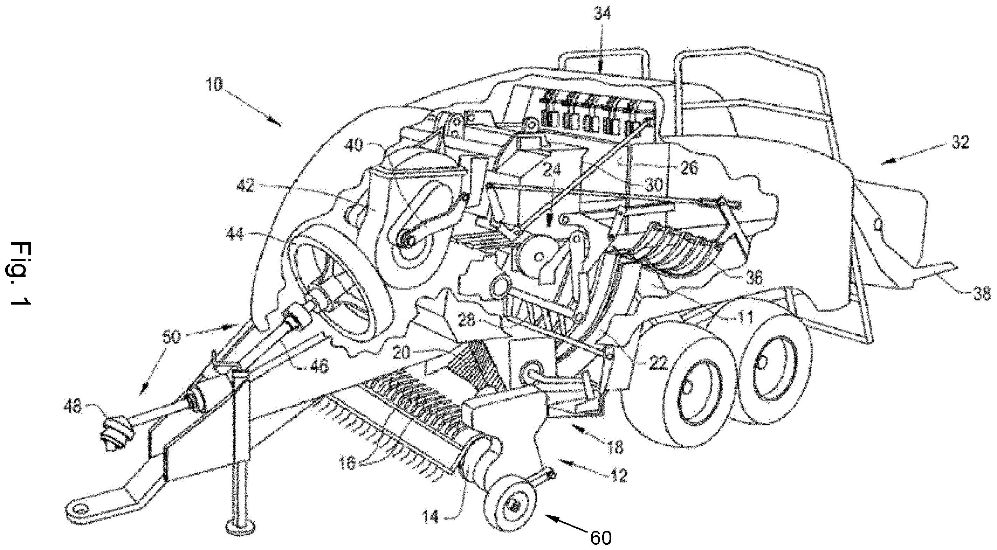

Figure 1 shows a perspective cutaway view showing the internal workings of an exemplary embodiment of an agricultural harvester in the form of a large square baler 10, provided according to the present disclosure. It should be appreciated that while the agricultural harvester 10 is illustrated and described herein as a large square baler, the agricultural harvester 10 may be provided as a variety of different harvesters that incorporate a pickup, including but not limited to a round baler, a small square baler, a forage harvester, a forage merger, a crop merger, a self-loading forage wagon, or a combine harvester. Baler 10 includes a chassis 11 carrying a number of baler components (described below) and operates on a two stage feeding system. Crop material is lifted from windrows into the baler 10 using a pickup 12. The pickup 12 includes a reel 14 with tines 16 which move the crop rearward toward a packer unit 18 , which may be generically referred to as a "feeder unit." An optional pair of stub augers (one of which is shown, but not numbered) are positioned above the reel 14 to move the crop material laterally inward.

The pickup 12 is supported on the field by a pair of support wheels 60, one of which is visible in Figure 1. The support wheel is pivotably mounted to the pickup, such that the support wheel 60 can remain in contact with the ground when the reel 14 is raised. It is noted that, instead of support wheels 60, alternative support members such as skid plates may be used for supporting the pickup 12 at a predetermined height above the ground.

The packer unit 18 includes packer tines 20 which push the crop into a feeding channel 22 to form a wad of crop material. The packer tines 20 intertwine the crop together and pack the crop within the feeding channel 22. Feeding channel 22 and packer tines 20 function as the first stage for crop compression. Once the pressure in the feeding channel 22 reaches a predetermined sensed value, a stuffer unit 24 moves the wad of crop from the feeding channel 22 to a main bale chamber 26. The stuffer unit 24 includes stuffer forks 28 which thrust the wad of crop directly in front of a plunger 30 , which reciprocates within the main bale chamber 26 and compresses the wad of crop into a flake. Stuffer forks 28 return to their original stationary state after the wad of material has been moved into the main bale chamber 26. Plunger 30 compresses the wads of crop into flakes to form a bale and, at the same time, gradually advances the bale toward outlet 32 of main bale chamber 26. Main bale chamber 26 and plunger 30 function as the second stage for crop compression. When enough flakes have been added and the bale reaches a full (or other predetermined) size, knotters 34 are actuated which wrap and tie twine around the bale while it is still in the main bale chamber 26. Needles 36 bring the lower twine up to the knotters 34 and the tying process then takes place. The twine is cut and the formed bale is ejected from a discharge chute 38 as a new bale is formed.

Plunger 30 is connected via a crank arm 40 with a gear box 42. Gear box 42 is driven by a flywheel 44 , which in turn is connected via a drive shaft 46 with the power take-off (PTO) coupler 48. The PTO coupler 48 is detachably connected with the PTO spline at the rear of the traction unit, such as a tractor (not shown). PTO coupler 48 , drive shaft 46 and flywheel 44 together define a portion of a driveline 50 which provides rotative power to gearbox 42. Flywheel 44 has a sufficient mass to carry plunger 30 through a compression stroke as power is applied to drive shaft 46 by the traction unit.

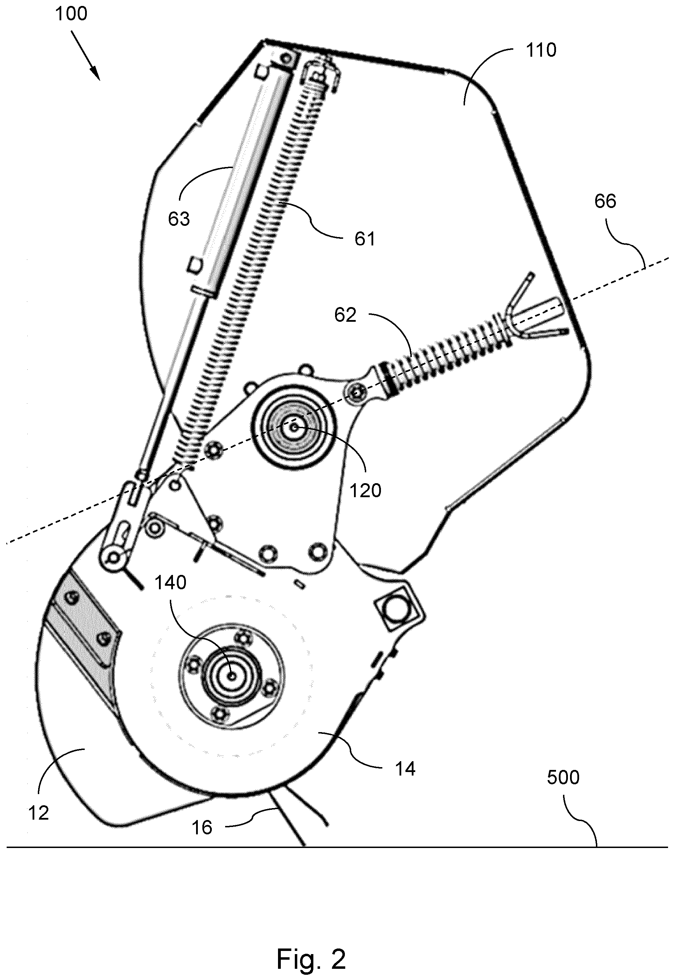

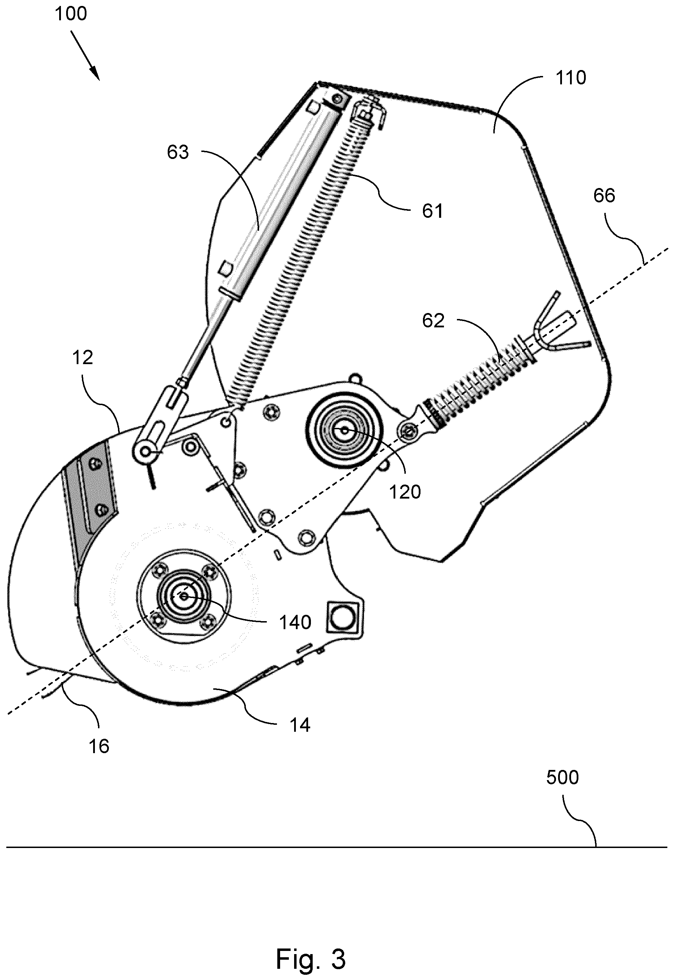

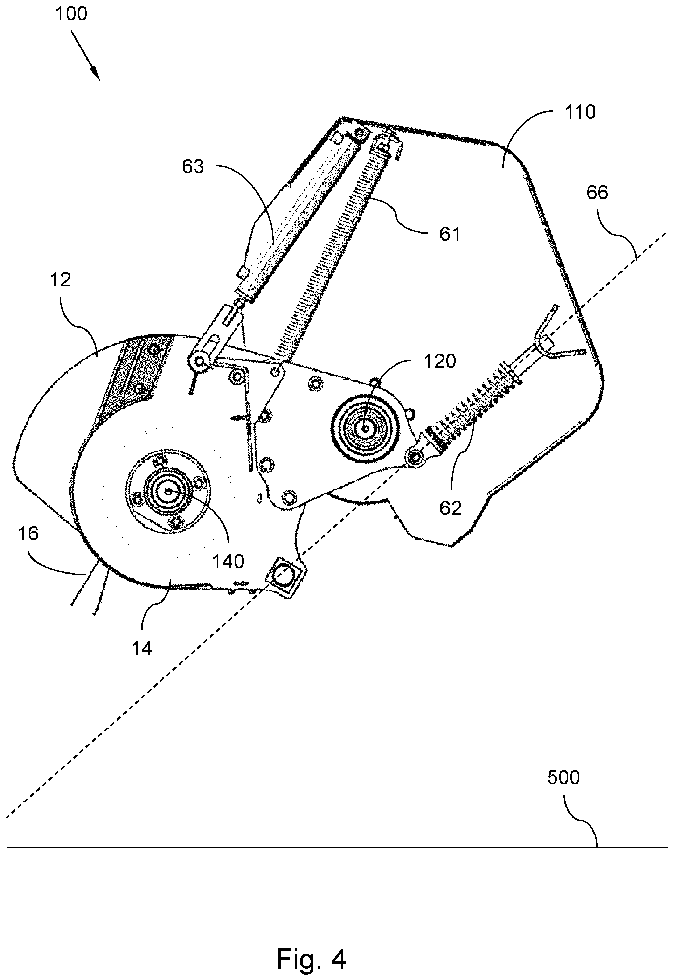

Figures 2 to 4 show a side view of part of a crop intake device 100 as may be used in the large square baler 10 of Figure 1. In Figure 2, the crop pick up unit 12, herein also referred to as just 'pickup' 12 is shown in a lowered configuration, wherein the tines 16 of the reel 14, in the lowermost portion of their rotational trajectory get very close to a ground level 500. This rotational trajectory of the tines 16 may be circular, but is usually adapted to spend a relatively large portion of its rotation at and around its minimal height. It is noted that in the drawings, only a small number of tines 16 is actually shown. In practice the reel 14 will comprise a large plurality of tine 16, distributed around and along the longitudinal and rotational axis 140 of the reel 14. In the side view of Figure 4, the same pickup 12 is shown in a raised configuration with its tines 16 situated much higher above the ground level 500. In the side view shown in Figure 3, the pickup 12 is positioned in an intermediate configuration, somewhere halfway between the lowered configuration of figure 2 and the raised configuration of Figure 4.

The pickup 12 is connected to the frame 110 of the harvester 10, or to a fixed part rigidly mounted to that frame 100, at a pivot point 120. Preferably, the pivot point 120 is at least substantially coaxial with a rotatable stub auger, such that the stub auger can remain stationary relative to the frame 10 and does not need to pivot together with the reel 14 and other parts of the pickup 12. Stub augers may be used to evenly spread the picked up crop over the full width of a crop intake channel of the crop intake device 100. In the event that the pickup 12 is wider than the crop intake channel, stub augers may move the picked up crop inwards to allow it to enter the harvester 10. By not including the stub auger in the pivoting pickup 12, the total weight of the pickup 12 is reduced. This lower weight helps to reduce the variation in the weight that needs to be carried by the support wheel. Furthermore, pivoting the pickup 12 around the longitudinal axis of the stub auger ensures that a distance between the reel 14 and the stub auger remains constant while pivoting the pickup 12 and adjusting the reel height. Hereby, a smooth crop flow into the agricultural harvester 10 is ensured in all possible configurations of the reel 14.

According to an embodiment of the invention, the pickup 12 is suspended by a first suspension spring 61 and a separate second suspension spring 62. Both suspensions springs 61, are connected between the frame 110 and the pickup 12. In this embodiment, the first suspension spring 61 and the second suspension spring 62 are mounted to different positions on the same frame part 110. In other embodiments, the suspension springs 61, 62 may be mounted to different frame parts. At their other ends, the suspension springs 61, 62 are mounted to different positions on the pickup 12. An actuator 63 is mounted between the frame 110 and the pickup 12 too. The actuator 63 enables a user to actively and remotely adjust the height of the pickup 12 above the ground level 500. The actuator 63 may, for example, be a hydraulic, electric, or pneumatic actuator, and may play a passive or active role in adjusting the suspension of the pickup 12. Sensors may be integrated into the actuator 63 for providing input signals for a closed loop active suspension control system.

In embodiments of the invention, the first and second suspension springs 61, 62 may both be tension springs. In other embodiments, both suspension springs 61, 62 may be compression springs. Alternatively, one of the two springs 61, 62 may be a suspension spring while the other one is a compression spring. A skilled person will be able to determine for each spring, depending on the type of spring being used, suitable connection points on the frame 110 and on the pickup 12, such that both springs 61, 62 show the intended behaviour.

In the preferred embodiment, shown in Figures 2 to 4, the first suspension spring 61 is a tension spring and the second suspension spring 62 is a compression spring. This combination of spring types makes it possible to strategically position both suspension springs 61, 62 at opposite sides of the pivot point 120, making it easier to find suitable positions on the frame 110 and the pickup 12 to mount the suspension springs 61, 62 to. The combined effect of one suspension spring 61 pulling at and the other suspension spring pushing 62 on the pickup 12 leads to an effective joint effort to relieve the support wheel 60 from an appropriate amount of weight resting thereon, regardless of the rotational position of the pickup unit 12 and the height of the reel 14.

The first suspension spring 61 is arranged such that a perpendicular distance between the first suspension spring 61 and the pivot point 120 of the pickup 12 on the frame 110 increases when moving the reel 14 towards the raised configuration. As a result of this increasing perpendicular distance to the pivot point 210, the lifting torque provided by the first suspension spring 61 increases as the reel 14 is raised. This is very useful, because the centre of gravity of the pickup 12 is moved away (measured in the horizontal direction) from the pivot point 120 of the pickup 12. The working height of the reel 14 is adapted by pivoting the support wheels 60 relative to the reel 14. For example, pivoting the support wheels 60 downwards relative to the reel 14 raises the reel relative to the ground 500. The raising of the reel 14 pivots the centre of gravity of the pickup 12 horizontally away from the pivot point 120. With the centre of gravity further out, the increasing lifting torque provided by the first suspension spring 61 limits the additional weight the pickup 12 exerts on the support wheels 60.

To further relieve some of the additional pressure on the support wheels 60 when the reel is lifted and moved further away from the pivot point 120 (as in, e.g., Figure 4), the second suspension spring 62 is arranged such that the lifting torque it provides on the pickup 12 increases when moving the reel 14 towards this raised configuration. The further the centre of gravity of the pickup 12 moves away from the pivot point 120 , the greater the lifting torque the second suspension spring 62 provides. The second suspension spring 62 thereby helps the support wheels 60 to carry a substantial part of the additional load when the need is there.

When the reel 14 is in or close to its lowered configuration (as in Figure 2), the centre of gravity of the pickup 12 is located much closer to the pivot point 120 (in the horizontal direction). In this position, there is hardly any weight for the support wheels 60 to bear. Advantageously, the lifting torque provided by the second suspension spring 62 decreases when moving the reel 14 towards this lowered configuration. This helps to avoid the pickup 12 to become too 'lightweight' and to start bouncing over the field, which would be an even bigger problem when the reel 14 is lowered and the tines 16 move close to the ground 500.

Advantageously, the second suspension spring 62 in this embodiment is arranged such that the lifting torque on the pickup 12 is negative during a portion of a movement of the reel 14 between the lowered configuration and the raised configuration. As can be observed in Figure 2, the longitudinal axis 66 of the second suspension spring 62 is located just above the pivot point 120 of the pickup 12, when the pickup is in its lowered configuration. As a result, the compression spring 62 actually pushes the pickup 12 down a bit. In this configuration, the lifting torque provided by the tension spring 61 is relatively low because of the short perpendicular distance between the tension spring 61 and the pivot point 120. Together, the weight of the pickup 12 and the slightly negative lifting torque provided by the compression spring 62 more than compensate for the limited lifting torque provided by the tension spring 61, which helps to ensure that the support wheels 60 remain in contact with the ground 500 and that the tines 16 maintain a substantially constant ground clearance.

Because the longitudinal axis 66 of the second suspension spring 62 passes from one side of the pivot point 120 to the other side thereof, this arrangement may be called an over centre arrangement. In this embodiment, the second suspension spring 62 is arranged such that it only goes over centre during an initial portion of the movement of the reel 14 between the lowered configuration and the raised configuration. When the pickup 12 is raised towards the intermediate configuration shown in Figure 3, the longitudinal axis 66 of the second suspension spring 62 quickly moves from above the pivot point 120 (Figure 2) to below the pivot point 120 (Figure 3). During the transition between these two illustrated configurations, the lifting torque moves from 'small negative' to 'small positive' to 'larger positive'. In the lifted configuration shown in Figure 4, the perpendicular distance between the longitudinal axis 66 and the pivot point 120 is at its maximum and the torque provided by the compression spring 62 will be so too.

In other embodiments the longitudinal axis 66 of the second suspension spring 62 may, for example, remain below the pivot point 120 in both the lowered and the raised configuration. In such other embodiments, the longitudinal axis 66 may, however, still approach the pivot point 120 very closely in the fully lowered configuration.

The crop intake device 100 may further comprise a windguard (not shown), arranged above the reel 14 to form an infeed channel between the two. The windguard is configured to pivot together with the pickup 12. This can be achieved in two ways. Either the windguard and its support are part of the pickup 21 itself, or the windguard is pivotably mounted to the frame 110 at a location that is different from the location of the pivot point 120 of the pickup 12. In the former situation, the windguard and windguard support simply pivot together with the pickup 12. In the latter situation, some mechanical or electromechanical mechanism may be used for synchronising the pivoting of the pickup 12 with the pivoting of the windguard. For example, a mechanical link may push the windguard up and pull it down, in parallel with the reel 14. Alternatively, a position sensor may be used for monitoring the position of the reel 14 and the windguard may be actively pivoted in dependence of a signal from that position sensor. Actively pivoting the windguard may be done by, for example, an electric or hydraulic motor.

## Claims

1. A crop intake device (100) for an agricultural harvester (10), the crop intake device (100) comprising a frame (110) and a crop pickup unit (12), pivotably mounted to the frame (110), the crop pickup unit (12) comprising:
a rotatable reel (14) with a plurality of tines (16) configured for picking up crop from a field;
at least one support member (60) for supporting the crop pickup unit (12) on the field during use, the support member (60) being pivotable relative to the reel (14) for setting a minimum height of the tines (16) by moving the reel (14) between a lowered configuration and a raised configuration;
the crop intake device (100) being **characterized in that** it further comprises a first suspension spring (61), coupled between the frame (110) and the crop pickup unit (12) such that a perpendicular distance between the first suspension spring (61) and a pivot point (120) of the crop pickup unit (12) on the frame (110) increases when moving the reel (14) towards the raised configuration; and
a second suspension spring (62), coupled between the frame (110) and the crop pickup unit (12), such that a lifting torque provided by the second suspension spring (62) on the crop pickup unit (12) increases when moving the reel (14) towards the raised configuration.

2. A crop intake device (100) as claimed in claim 1, wherein the first suspension spring (61) and the second suspension spring (62) are tension springs.

3. A crop intake device (100) as claimed in claim 1, wherein the first suspension spring (61) and the second suspension spring (62) are compression springs.

4. A crop intake device (100) as claimed in claim 1, wherein one of the first suspension spring (61) and the second suspension spring (62) is a tension spring and the other one of the first suspension spring (61) and the second suspension spring (62) is a compression spring.

5. A crop intake device (100) as claimed in any preceding claim, wherein the second suspension spring (62) is arranged such that the lifting torque on the crop pickup unit (12) is negative during a portion of a movement of the reel (14) between the lowered configuration and the raised configuration.

6. A crop intake device (100) as claimed in claim 5, wherein the second suspension spring (62) is arranged such that the lifting torque is only negative during an initial portion of the movement of the reel (14) between the lowered configuration and the raised configuration.

7. A crop intake device (100) as claimed in any preceding claim, wherein the second suspension spring (62) is arranged such that, when the reel (14) is in the lowered configuration, a longitudinal axis (66) of the second suspension spring (62) is above the pivot point (120), and when the reel (14) is in the raised configuration, the longitudinal axis (66) of the second suspension spring (62) is below the pivot point (120).

8. A crop intake device (100) as claimed in any preceding claim, wherein the pivot point (120) of the crop pickup unit (12) on the frame (110) is at least substantially coaxial with a rotatable stub auger.

9. A crop intake device (100) as claimed in any preceding claim, further comprising a windguard, arranged to form an infeed channel between the windguard and the rotatable reel (14), the windguard being configured to pivot together with the crop pickup unit (12).

10. A crop intake device (100) as claimed in claim 9 wherein the windguard is pivotably mounted to the frame (110) at a location that is different from a location of the pivot point (120) of the crop pickup unit (12) on the frame (110).

11. A crop intake device (100) as claimed in any preceding claim, further comprising an actuator (63) for pivoting the crop pickup unit (12) relative to the frame (110).

12. An agricultural harvester (10) comprising a crop intake device (100) as claimed in any preceding claim.

13. An agricultural harvester (10) as claimed in claim 12, wherein the agricultural harvester (10) is a baler, a forage harvester, or a combine harvester.

14. A crop intake device (100) as claimed in any of claims 1 to 11, wherein the crop intake device (100) is a header for a forage harvester or for a combine harvester.

## Patentansprüche

1. Erntegutaufnahmevorrichtung (100) für eine landwirtschaftliche Erntemaschine (10), wobei die Erntegutaufnahmevorrichtung (100) einen Rahmen (110) und eine Erntegutaufnahmeeinheit (12) umfasst, die schwenkbar an dem Rahmen (110) angebracht ist, wobei die Erntegutaufnahmeeinheit (12) umfasst:
eine drehbare Haspel (14) mit einer Vielzahl von Zinken (16), die zum Aufnehmen von Erntegut von einem Feld konfiguriert ist;
mindestens ein Stützelement (60) zum Abstützen der Erntegutaufnahmeeinheit (12) auf dem Feld während des Gebrauchs, wobei das Stützelement (60) relativ zu der Haspel (14) schwenkbar ist, um eine Mindesthöhe der Zinken (16) durch Bewegen der Haspel (14) zwischen einer abgesenkten Konfiguration und einer angehobenen Konfiguration einzustellen;
wobei die Erntegutaufnahmevorrichtung (100) **dadurch gekennzeichnet ist, dass** sie ferner eine erste Aufhängungsfeder (61) umfasst, die zwischen dem Rahmen (110) und der Erntegutaufnahmeeinheit (12) derart gekoppelt ist, dass ein senkrechter Abstand zwischen der ersten Aufhängungsfeder (61) und einem Drehpunkt (120) der Erntegutaufnahmeeinheit (12) am Rahmen (110) zunimmt, wenn die Haspel (14) in Richtung der angehobenen Konfiguration bewegt wird; und
eine zweite Aufhängungsfeder (62) zwischen dem Rahmen (110) und der Erntegutaufnahmeeinheit (12) derart gekoppelt ist, dass ein Hubdrehmoment, das durch die zweite Aufhängungsfeder (62) an der Erntegutaufnahmeeinheit (12) bereitgestellt wird, zunimmt, wenn die Haspel (14) in Richtung der angehobenen Konfiguration bewegt wird.

2. Erntegutaufnahmevorrichtung (100) nach Anspruch 1, wobei die erste Aufhängungsfeder (61) und die zweite Aufhängungsfeder (62) Zugfedern sind.

3. Erntegutaufnahmevorrichtung (100) nach Anspruch 1, wobei die erste Aufhängungsfeder (61) und die zweite Aufhängungsfeder (62) Druckfedern sind.

4. Erntegutaufnahmevorrichtung (100) nach Anspruch 1, wobei eine der ersten Aufhängungsfeder (61) und der zweiten Aufhängungsfeder (62) eine Spannfeder ist und die andere der ersten Aufhängungsfeder (61) und der zweiten Aufhängungsfeder (62) eine Druckfeder ist.

5. Erntegutaufnahmevorrichtung (100) nach einem der vorstehenden Ansprüche, wobei die zweite Aufhängungsfeder (62) derart angeordnet ist, dass das Hubdrehmoment an der Erntegutaufnahmeeinheit (12) während eines Teils einer Bewegung der Haspel (14) zwischen der abgesenkten Konfiguration und der angehobenen Konfiguration negativ ist.

6. Erntegutaufnahmevorrichtung (100) nach Anspruch 5, wobei die zweite Aufhängungsfeder (62) derart angeordnet ist, dass das Hubdrehmoment nur während eines anfänglichen Abschnitts der Bewegung der Haspel (14) zwischen der abgesenkten Konfiguration und der angehobenen Konfiguration negativ ist.

7. Erntegutaufnahmevorrichtung (100) nach einem der vorstehenden Ansprüche, wobei die zweite Aufhängungsfeder (62) derart angeordnet ist, dass, wenn sich die Haspel (14) in der abgesenkten Konfiguration befindet, eine Längsachse (66) der zweiten Aufhängungsfeder (62) oberhalb des Schwenkpunkts (120) liegt, und wenn sich die Haspel (14) in der angehobenen Konfiguration befindet, die Längsachse (66) der zweiten Aufhängungsfeder (62) unterhalb des Schwenkpunkts (120) liegt.

8. Erntegutaufnahmevorrichtung (100) nach einem der vorstehenden Ansprüche, wobei der Schwenkpunkt (120) der Erntegutaufnahmeeinheit (12) an dem Rahmen (110) zumindest im Wesentlichen koaxial zu einem drehbaren Schneckenstummel ist.

9. Erntegutaufnahmevorrichtung (100) nach einem der vorstehenden Ansprüche, ferner umfassend einen Windschutz, der angeordnet ist, um einen Zufuhrkanal zwischen dem Windschutz und der drehbaren Haspel (14) zu bilden, wobei der Windschutz konfiguriert ist, um zusammen mit der Erntegutaufnahmeeinheit (12) zu schwenken.

10. Erntegutaufnahmevorrichtung (100) nach Anspruch 9, wobei der Windschutz schwenkbar an dem Rahmen (110) an einer Stelle angebracht ist, die von einer Stelle des Schwenkpunkts (120) der Erntegutaufnahmeeinheit (12) an dem Rahmen (110) verschieden ist.

11. Erntegutaufnahmevorrichtung (100) nach einem der vorstehenden Ansprüche, ferner umfassend einen Aktuator (63) zum Schwenken der Erntegutaufnahmeeinheit (12) relativ zu dem Rahmen (110).

12. Landwirtschaftliche Erntemaschine (10), umfassend eine Erntegutaufnahmevorrichtung (100) nach einem der vorstehenden Ansprüche.

13. Landwirtschaftliche Erntemaschine (10) nach Anspruch 12, wobei die landwirtschaftliche Erntemaschine (10) eine Ballenpresse, ein Feldhäcksler oder ein Mähdrescher ist.

14. Erntegutaufnahmevorrichtung (100) nach einem der Ansprüche 1 bis 11, wobei die Erntegutaufnahmevorrichtung (100) ein Vorsatz für einen Feldhäcksler oder für einen Mähdrescher ist.

## Revendications

1. Dispositif de coupe de récolte (100) pour une récolteuse agricole (10), le dispositif de coupe de récolte (100) comprenant un châssis (110) et une unité de ramassage de récolte (12), montée de manière pivotante sur le châssis (110), l'unité de ramassage de récolte (12) comprenant :
un rabatteur (14) rotatif doté d'une pluralité de fourches (16) conçues pour ramasser une récolte dans un champ ;
au moins un élément de support (60) destiné à supporter l'unité de ramassage de récolte (12) dans le champ pendant l'utilisation, l'élément de support (60) pouvant pivoter par rapport au rabatteur (14) pour régler une hauteur minimale des fourches (16) en déplaçant le rabatteur (14) entre une configuration abaissée et une configuration relevée ;
le dispositif de coupe de récolte (100) étant **caractérisé en ce qu'il** comprend en outre un premier ressort de suspension (61) accouplé entre le châssis (110) et l'unité de ramassage de récolte (12) de telle sorte qu'une distance perpendiculaire entre le premier ressort de suspension (61) et un point de pivotement (120) de l'unité de ramassage de récolte (12) sur le châssis (110) augmente lors du déplacement du rabatteur (14) vers la configuration relevée ; et
un second ressort de suspension (62) accouplé entre le châssis (110) et l'unité de ramassage de récolte (12) de telle sorte qu'un couple de levage fourni par le second ressort de suspension (62) sur l'unité de ramassage de récolte (12) augmente lors du déplacement du rabatteur (14) vers la configuration relevée.

2. Dispositif de coupe de récolte (100) selon la revendication 1, dans lequel le premier ressort de suspension (61) et le second ressort de suspension (62) sont des ressorts de tension.

3. Dispositif de coupe de récolte (100) selon la revendication 1, dans lequel le premier ressort de suspension (61) et le second ressort de suspension (62) sont des ressorts de compression.

4. Dispositif de coupe de récolte (100) selon la revendication 1, dans lequel l'un parmi le premier ressort de suspension (61) et le second ressort de suspension (62) est un ressort de tension et l'autre parmi le premier ressort de suspension (61) et le second ressort de suspension (62) est un ressort de compression.

5. Dispositif de coupe de récolte (100) selon l'une quelconque des revendications précédentes, dans lequel le second ressort de suspension (62) est agencé de telle sorte que le couple de levage sur l'unité de ramassage de récolte (12) est négatif pendant une partie d'un mouvement du rabatteur (14) entre la configuration abaissée et la configuration relevée.

6. Dispositif de coupe de récolte (100) selon la revendication 5, dans lequel le second ressort de suspension (62) est agencé de telle sorte que le couple de levage n'est négatif que pendant une partie initiale du mouvement du rabatteur (14) entre la configuration abaissée et la configuration relevée.

7. Dispositif de coupe de récolte (100) selon l'une quelconque des revendications précédentes, dans lequel le second ressort de suspension (62) est agencé de telle sorte que, lorsque le rabatteur (14) est dans la configuration abaissée, un axe longitudinal (66) du second ressort de suspension (62) est au-dessus du point de pivotement (120), et lorsque le rabatteur (14) est dans la configuration relevée, l'axe longitudinal (66) du second ressort de suspension (62) est en dessous du point de pivotement (120).

8. Dispositif de coupe de récolte (100) selon l'une quelconque des revendications précédentes, dans lequel le point de pivotement (120) de l'unité de ramassage de récolte (12) sur le châssis (110) est au moins sensiblement coaxial avec une vis sans fin rotative.

9. Dispositif de coupe de récolte (100) selon l'une quelconque des revendications précédentes, comprenant en outre un pare-vent, agencé pour former un canal d'amenée entre le pare-vent et le rabatteur (14) rotatif, le pare-vent étant conçu pour pivoter conjointement avec l'unité de ramassage de récolte (12).

10. Dispositif de coupe de récolte (100) selon la revendication 9, dans lequel le pare-vent est monté de manière pivotante sur le châssis (110) au niveau d'un emplacement qui est différent d'un emplacement du point de pivotement (120) de l'unité de ramassage de récolte (12) sur le châssis (110).

11. Dispositif de coupe de récolte (100) selon l'une quelconque des revendications précédentes, comprenant en outre un actionneur (63) destiné à faire pivoter l'unité de ramassage de récolte (12) par rapport au châssis (110).

12. Récolteuse agricole (10) comprenant un dispositif de coupe de récolte (100) selon l'une quelconque des revendications précédentes.

13. Récolteuse agricole (10) selon la revendication 12, dans laquelle la récolteuse agricole (10) est une presse à balles, une ensileuse ou une moissonneuse-batteuse.

14. Dispositif de coupe de récolte (100) selon l'une quelconque des revendications 1 à 11, dans lequel le dispositif de coupe de récolte (100) est une tête de coupe pour une ensileuse ou pour une moissonneuse-batteuse.
